# EUROPÄISCHE PATENTSCHRIFT

(11) **EP 2 520 752 B1**
(45) Veröffentlichungstag und Bekanntmachung des Hinweises auf die Patenterteilung: **21.12.2016**
(21) Anmeldenummer: 12002972.3
(22) Anmeldetag: 26.04.2012
(51) Int. Cl.: E06B 3/02, E06B 5/16, E06B 3/663, B32B 17/06, E06B 3/70

(54) **Brandschutz-Doppelverglasung**
Fire protection double glazing
Double vitrage coupe-feu

(30) Priorität: 05.05.2011 DE 202011100312 U
(43) Veröffentlichungstag der Anmeldung: 07.11.2012
(73) Patentinhaber: PROMAT GmbH, 40878 Ratingen (DE)
(72) Erfinder: Wiedemann, Günter, 40629 Düsseldorf (DE)
(74) Vertreter: Ring & Weisbrodt

(56) Entgegenhaltungen:
- EP-A1- 1 820 931
- DE-U1-202008 016 781
- US-A- 4 893 443

## Beschreibung

Die Erfindung betrifft eine Verglasung für Brandschutz-Wandelemente, -Fenster, - Türen oder dergleichen mit zumindest zwei parallel beabstandeten Glasscheiben und einem zwischen diesen Glasscheiben angeordneten Abstandhalter, wobei der Abstandhalter eine Hülse und zumindest zwei mit der Hülse fest verbundene parallel beabstandete Anschlagflächen aufweist und die Hülse beide Anschlagflächen in longitudinaler Richtung der Hülse überragt. Die Erfindung betrifft ferner ein Brandschutzelement, insbesondere in Form eines Wandelementes, eines Fensters, oder einer Türe, umfassend eine solche Verglasung, die mit einer Halterung fixiert ist.

Aus dem Stand der Technik sind Brandschutzscheiben mit verschiedenartigen Halterungen bekannt. Die DE 3508078 (A1) beschreibt eine Halterung für Brandschutzscheiben, bei der die einzelnen Scheiben durch eine die Stoßkanten der Brandschutzscheibe umgreifende Rahmenkonstruktion gehalten werden. Bei diesem Aufbau wird es teilweise als nachteilig empfunden, dass kein rahmenloser Aufbau für eine Brandschutzverglasung realisiert werden kann. Insbesondere dann, wenn bewegliche Elemente wie Türen oder Fenster in die Verglasung integriert werden sollen, kann die Vielzahl an hierfür einzusetzenden Rahmenteilen das optische Erscheinungsbild beeinträchtigen auch den Lichtdurchtritt verringern.

Das deutsche Gebrauchsmuster DE 29819678(U1) stellt eine Brandschutzverglasung vor, bei der die vertikalen Stoßfugen der Brandschutzscheiben durch ein Dichtungsmittel verfüllt sind. Dieses Brandschutz-Wandelement weist ferner ein Fenster auf, das mittels einer Zarge und einem Rahmen in dem Brandschutz-Wandelement eingebaut ist. Auch bei dieser Lösung kann es als nachteilig empfunden werden, dass verschließbare Öffnungen nicht rahmenlos eingebaut werden können, was den Lichtdurchtritt durch die Verglasung reduziert.

In der europäischen Patentanmeldung EP 0 658 677 A1 wird eine rahmenlose Brandschutzverglasung beschrieben, bei der Brandschutzscheiben an einer freistehenden Stützkonstruktion befestigt werden. Die einzelnen Brandschutzscheiben werden bei dieser Lösung mittels Halterungen fixiert, bei denen auf den beiden Seiten der Brandschutzscheibe korrespondierende Stützplatten vorgesehen sind, die mittels einer durch die Brandschutzscheibe hindurch geführten Verschraubung miteinander verbunden werden und auf diese Weise die dazwischen befindliche Brandschutzscheibe im Klemmsitz halten.

Nachteilig bei dieser Lösung ist die Tatsache, dass aufgrund der durch die Scheibe hindurchgeführten Verschraubung und dem auf diese Weise realisierten Klemmsitz nur massive Brandschutzscheiben bzw. Verbund-Brandschutzscheiben mit zwischen den Glasscheiben liegenden festen intumeszierenden Schichten eingesetzt werden können. Die Verwendung von mehrlagigen gelgefüllten Brandschutzscheiben ist deshalb nicht möglich.

Aus der europäischen Patentanmeldung EP 1 820 931 A1 ist eine Brandschutzverglasung bekannt, welche mindestens zwei transparente Brandschutz-Glasplatteneinheiten besitzt, die an Seitenkanten mittelbar aneinander stoßen und deren übrige Seitenkanten an einem Bauteil gehalten sind. Dabei ist jede Brandschutz-Glasplatteneinheit aus auf Abstand gehaltenen, parallelen Glasscheiben aufgebaut, zwischen denen ein Brandschutzmittel angeordnet ist. Zur Schaffung einer Brandschutzverglasung, die weniger Glasscheiben benötigt, einfacher aufzubauen ist und in der Stoßfuge eine höhere Sicherheit gegen den Durchtritt von Feuer und Rauch bietet, ist jede Brandschutz-Glasplatteneinheit aus zwei nach einer Isolierglasscheibenanordnung mittels Abstandhalter und einem PU-Randverbund auf Abstand und aneinander gehaltenen ESG-Scheiben aufgebaut.

Aus der US-Patentschrift 4,893,443 ist ferner eine versiegelte, doppelte Glaseinheit bekannt, welche ein Befestigungssystem aufweist, das randseitig an einer inneren und äußeren Glasscheibe angebracht ist und zur Befestigung der Glaseinheit an einem Halteelement dient. Dabei kommen ein innerer und ein äußerer plattenförmiger Beschlag zum Einsatz, welche mittels eines Bolzens miteinander verbunden sind und in ihrem Zwischenraum die Glaseinheit halten, wobei der innere Beschlag ferner zur Halterung mit einem Bauteil verbunden ist.

Eine gattungsgemäße Verglasung ist aus dem deutschen Gebrauchsmuster DE 20 2008 016 781 U1 bekannt. Darin ist eine Halterung für eine Brandschutzverglasung aus zwei parallel beabstandeten Glasscheiben mit einem Halteelement und einem Abstandhalter beschrieben. Der Abstandhalter besteht aus einer Hülse und zumindest zwei mit der Hülse fest verbundenen parallel beabstandeten Anschlagflächen, wobei die Hülse auf beiden Seiten der Anschlagflächen übersteht. Ferner sind eine Gegenplatte und ein Fixiermittel vorgesehen, mit dem das Halteelement durch die Hülse mit der Gegenplatte verbunden werden kann.

Der Abstandhalters wird bei der Montage in eine Aussparung der Glasscheibe eingeführt und überragt diese auf der Außenseite der Glasscheibe. Durch diese Anordnung verhindert der Abstandhalter bei der Fixierung der Glasscheibe, dass diese durch die Verschraubung zusammengedrückt wird und dadurch möglicherweise Schaden nimmt. Die beidseitig die Anschlagflächen überragenden Abschnitte der Hülse sorgen zudem dafür, dass selbst wenn eine der Glasflächen im Brandfall zerstört wird, die weitere Scheibe noch gehalten wird.

Diese Lösung ist nicht in jeder Hinsicht befriedigend. Nachteilig bei dieser Lösung ist vor allem, dass je nach Scheibenstärke der für die Herstellung der Brandschutzverglasung verwendeten Einzelscheiben jeweils individualisiert angepasste Abstandhalter entworfen und hergestellt werden müssen, da der Überstand der Hülse über die jeweiligen Anschlagflächen grundsätzlich geringfügig größer sein muss als die Stärke der Glasscheiben, um diese unbelastet im Klemmsitz fixieren zu können. Dadurch muss nicht nur eine Vielzahl an verschiedenen Modellen von Abstandhaltern produziert werden, sondern dies erschwert auch die Montage, da bereits beim Verkleben des Abstandhalters mit der Glasscheibe penibel darauf geachtet werden muss, dass der Abstandhalter die zur Stärke der Glasscheibe passende Geometrie aufweist; andernfalls ist die Brandschutzscheibe später nicht mehr zu gebrauchen. Diese notwendige Sorgfalt kann jedoch in der Praxis auf einer Baustelle nicht gewährleistet werden.

Die Aufgabe der vorliegenden Erfindung besteht darin, bei einer Verglasung der eingangs genannten Art einen modifizierten Abstandhalter anzugeben, welcher variabler einsetzbar und einfacher zu montieren ist sowie eine verringerte Fehleranfälligkeit bei der Montage sicherstellt.

Die erfindungsgemäße Aufgabe wird gelöst durch eine Verglasung für Brandschutz-Wandelemente, -Fenster, -Türen oder dergleichen mit zumindest zwei parallel beabstandeten Glasscheiben und einem zwischen diesen Glasscheiben angeordneten Abstandhalter, wobei der Abstandhalter eine Hülse und zumindest zwei mit der Hülse fest verbundene parallel beabstandete Anschlagflächen aufweist und die Hülse beide Anschlagflächen in longitudinaler Richtung der Hülse überragt, wobei die Verglasung dadurch gekennzeichnet ist, dass in der Hülse eine Druckhülse angeordnet ist, welche die Außenflächen der Glasscheiben überragt.

Mit anderen Worten ist der Abstandhalter aus zwei Hauptelementen aufgebaut, von denen das eine Element die Anschlagflächen trägt und damit die beiden Glasscheiben auf dem vorgesehenen Abstand hält, wohingegen das zweite Element, nämlich die Druckhülse, dafür sorgt, dass die Brandschutzscheibe bei der Befestigung keinen mechanischen Biegekräften ausgesetzt wird.

Vorzugsweise entspricht der Überstand der Hülse über die Anschlagflächen maximal der Stärke der eingesetzten Glasscheiben.

Da bei der erfindungsgemäßen Ausgestaltung des Abstandhalters die mit den Anschlagflächen versehene Hülse nicht mehr über die Außenflächen der Glasscheiben hinausragen muss, kann die Hülse bei nahezu jeder Glasscheibendicke eingesetzt werden. So können auch Brandschutzscheiben aus zwei verschieden starken Glasscheiben problemlos konstruiert werden, ohne dass es hierfür eines entsprechend asymmetrischen Abstandhalters bedürfte.

Hinzu kommt, dass die Druckhülse erst nach der eigentlichen Fertigstellung der Brandschutzscheibe eingesetzt werden muss und zudem auch leicht ausgetauscht werden kann, so dass eine falsche Montage auf der Baustelle praktisch ausgeschlossen ist.

In vorteilhafter Ausgestaltung der erfindungsgemäßen Verglasung ist die Druckhülse in der Hülse formschlüssig angeordnet. Auf diese Weise kann die Verglasung mit Hilfe eines durch die Druckhülse geführten Befestigungsmittels zuverlässiger fixiert werden. Mit der formschlüssigen Anordnung der Druckhülse in der Hülse des Abstandhalters wird ein strammer Verbund vorteilhafterweise erzielt. Der Überstand der Druckhülse über die Außenflächen der Glasscheiben beträgt auf jeder Seite vorzugsweise zwischen 0,5 und 5 mm. Dies ermöglicht eine sichere Fixierung der Verglasung in einer Halterung und erlaubt es zudem, zwischen der Halterung und den Außenflächen der Verglasung beispielsweise Dämpfungselemente in Form von Gummidichtungen und dergleichen vorzusehen.

Nach einer besonders bevorzugten Ausführungsform der erfindungsgemäßen Verglasung weist der Abstandhalter konische Auflaufflächen auf, die insbesondere im Übergangsbereich zwischen der Hülse und den Anschlagflächen vorgesehen sind. Dies ist von Vorteil, weil auf diese Weise die Hülse exakter in der Aussparung der Glasscheibe positioniert werden kann, da die konischen Auflaufflächen den Abstandhalter automatisch zentrieren. Hierzu können die Glasscheiben im Bereich der Aussparungen ferner mit abgeschrägten Kanten versehen sein, wobei deren Neigung und die Neigung der Auflaufflächen aufeinander abgestimmt sein können.

Zudem kann bei einem derart ausgeformten Abstandhalter die Montage der Verglasung schneller erfolgen, da im Unterschied zu dem aus der DE 20 2008 016 781 U1 bekannten Lösung vor der Montage der zweiten Glasscheibe das vollständige Aushärten des Klebstoffs nicht mehr abgewartet werden muss, um ein Verschieben des Abstandhalters zu verhindern.

Ein weiterer Vorteil dieser Ausführungsform besteht darin, dass auf diese Weise auch eine bessere Abdichtung zwischen dem Abstandhalter und den Glasscheiben erzielbar ist. So hat sich herausgestellt, dass Verglasungen mit einem aus der DE 20 2008 016 781 U1 bekannten Abstandhalter im Bereich der Verklebungen anfällig sind. Doch auch bei einer Doppelverglasung mit gasgefülltem Zwischenraum zwischen den Glasscheiben hat diese Lösung Vorteile, denn hierbei wird ein atmosphärischer Austausch des Füllgases mit der Außenluft wirksam unterbunden, was ansonsten zu einer Verschlechterung der Wärmedämmeigenschaften führen könnte. Mit anderen Worten ist der erfindungsgemäße Vorteil nicht auf gelgefüllte Brandschutzscheiben beschränkt.

In Weiterbildung der erfindungsgemäßen Verglasung weist die Hülse einen runden Querschnitt auf. Dies ist von Vorteil, da die in den Glasscheiben zur Anbringung von Scharnieren und dergleichen vorgesehenen Aussparungen in der Regel ebenfalls rund sind. Über einer solchen Aussparung kann der oben beschriebene Abstandhalter dann zuverlässig verklebt werden.

Unabhängig von der Form der Hülse können eine oder beide Anschlagflächen einen runden Querschnitt aufweisen. Dies ist besonders vorteilhaft, da bei der Fixierung einer solchen Verglasung die zwischen den Anschlagflächen und den Glasscheiben durch den Klemmsitz hervorgerufenen Kräfte gleichmäßiger verteilt werden.

In weiterer Ausgestaltung der erfindungsgemäßen Verglasung ist der Abstandhalter über einen Klebstoff und/ oder ein Füllmaterial mit den Glasscheiben verbunden. Hierfür können dem Fachmann an sich bekannte Kleb- beziehungsweise Füllstoffe eingesetzt werden, insbesondere spaltüberbrückende Klebstoffe, Gießharze, Silikonklebstoffe oder Silikonmassen. Die Gießharze können ein- oder zweikomponentig sein.

Nach einer weiteren Ausführungsform der erfindungsgemäßen Verglasung besteht der Abstandhalter aus Kunststoff und/ oder Metall, insbesondere aus mit Kunststoff beschichtetem Metall. Als Kunststoffe kommen beispielsweise glasfaserverstärkte Kunststoffe (GFK), Polyethylen (PE) oder Polypropylen (PP) in Betracht. Dabei sollten die Kunststoffe eine in Relation zur Scheibengröße und der gewünschten Materialstärke des Abstandshalters erforderliche Festigkeit besitzen. Kommen Brandschutzscheiben mit einem Brandschutzgel zum Einsatz, muss der Kunststoff gleichzeitig eine ausreichende chemische Beständigkeit gegenüber dem Brandschutzgel besitzen.

Abstandhalter aus Metall können zum Beispiel aus Eisen, Stahl, Edelstahl oder Aluminium gefertigt sein. Bevorzugt werden diese Metalle mit Kunststoff beschichtet, um Wechselwirkungen mit dem Brandschutzgel zu verhindern. Diese Wechselwirkungen können zum einen zur oberflächlichen Korrosion des Abstandhalters und gleichzeitig zu Verfärbungen des Brandschutzgels sowie Gasblasenbildung im Gel führen, was das optische Erscheinungsbild der Verglasung beeinträchtigen kann.

Als Kunststoffbeschichtung für die vorgenannten Metalle kommen prinzipiell sämtliche Kunststoffe in Betracht, die einerseits an dem Metall haften und andererseits eine ausreichende chemische Resistenz gegenüber dem eingesetzten Brandschutzgel aufweisen. Für diesen Zweck können die Abstandshalter aus Metall beispielsweise mit Polyethylen, Polypropylen oder PTFE beschichtet werden. Auch kann der erwünschte Schutz durch Pulverbeschichtung erzielt werden.

Die Kunststoffbeschichtung kann in diesem Fall gleichzeitig auch die Funktion eines Dämpfungselements erfüllen, da der direkte Kontakt zwischen Metall und Glasscheibe verhindert wird. Soll unbeschichtetes Metall eingesetzt werden, können zwischen den Anschlagflächen des Abstandhalters und den Glasscheiben ebenfalls Dämpfungselemente vorgesehen werden.

Es ist ebenso möglich, den Abstandshalter aus einem harten Kunststoff zu fertigen, der selbst gegenüber dem Brandschutzgel keine ausreichende chemische Stabilität besitzt und dann diesen Kunststoff-Abstandhalter in analoger Weise zu den Metall-Abstandhaltern mit einem der oben genannten Kunststoffe zu beschichten, um die chemische Resistenz des Bauteils sicher zu stellen.

Die erfindungsgemäß eingesetzten Abstandhalter können entweder spanabhebend aus einem Materialstück herausgearbeitet werden, zum Beispiel auf einer Drehbank oder mittels eines Gießverfahrens hergestellt werden. Es ist jedoch ebenso möglich, den Abstandhalter aus einer Hülse und den beiden Anschlagflächen durch zusammenfügen dieser Bauteile über Kleben, Schweißen oder ähnliche Fügetechniken herzustellen.

Bei denjenigen der vorgenannten Ausführungsformen, bei denen der Abstandhalter eine Kunststoffoberfläche aufweist, ist es weiterhin bevorzugt, dass diese zumindest im Bereich der Anschlagflächen haftungsverbessernd vorbehandelt ist. Diese Vorbehandlung kann auch auf der gesamten Oberfläche des Abstandhalters vorgenommen werden. Hierzu können Techniken wie beispielsweise mechanisches Anrauen, eine Corona-Vorbehandlung, Anätzen, Beschichten mit einem geeigneten Primer oder Haftvermittler oder andere für diesen Zweck bekannte Methoden zum Einsatz kommen.

Für die Druckhülse kann prinzipiell jedes Material zum Einsatz kommen, beispielsweise kann die Druckhülse aus Kunststoff oder Metall, insbesondere aus mit Kunststoff beschichtetem Metall bestehen, also prinzipiell aus denselben Materialien wie der Abstandhalter. Da die Druckhülse jedoch nicht in direktem Kontakt mit dem Brandschutzgel steht, können darüber hinaus noch weitere Materialien verwendet werden, wie Messing oder andere Buntmetalllegierungen und dergleichen.

Für die erfindungsgemäße Verglasung können prinzipiell sämtliche Arten von Glasscheiben eingesetzt werden. Vorzugsweise besteht jedoch zumindest eine der Glasscheiben aus Sicherheitsglas, insbesondere aus Einscheibensicherheitsglas. Dies ist besonders vorteilhaft, da dieses bei extrem hohen Temperaturen im Brandfall in sehr viele kleine Bruchstücke zerspringt, von denen zum einen eine geringere Verletzungsgefahr ausgeht und die zum anderen auch im zerborstenen Zustand gut am Brandschutzgel haften und damit weiterhin das Brandschutzgel für eine gewisse Zeit vor dem direkten Flammenkontakt schützen. Da Einscheibensicherheitsglas nach dem Vorspannen nicht mehr geschnitten werden kann, müssen die Aussparungen für die Anbringung von Scharnieren, Schlössern und dergleichen bereits vor dem Vorspannen in den Glasscheiben vorgesehen werden. Erfindungsgemäß lassen sich jedoch ebenso andere Glasscheiben verwenden, wie Floatglas oder Verbundsicherheitsglas.

Die Glasscheiben können unabhängig voneinander eine Scheibendicke von 3 bis 20 mm aufweisen, bevorzugt 5 bis 10 mm. Der Abstand der Glasscheiben kann vorzugsweise im Bereich von 5 bis 50 mm liegen. Besonders bevorzugt beträgt der Abstand der Glasscheiben voneinander etwa 8 bis 25 mm, da sich auf diese Weise insbesondere bei mit Brandschutzgel gefüllten Brandschutzverglasungen gute Brandresistenzen bei gleichzeitig moderatem Gewicht der Verglasung erzielen lassen.

In Weiterbildung der Erfindung ist der Raum zwischen den Glasscheiben mit einem Feststoff oder einem Gel, insbesondere einem Brandschutzgel gefüllt. Mit Brandschutzgel bzw. Hydrogel gefüllte Brandschutzscheiben sind beispielsweise in der EP 1 820 931 A1 und in der DE 10 2005 018 842 A1 beschrieben. Diese Brandschutzscheiben haben gegenüber den ansonsten vielfach eingesetzten Brandschutzscheiben mit festen silikathaltigen intumeszierenden Zwischenschichten, beispielsweise auf Wasserglasbasis, den Vorteil, dass sie ein geringeres Flächengewicht bei vergleichbarer Feuerwiderstandsklasse erreichen können. Das bedeutet nicht nur einen einfacheren Transport der Scheiben, sondern auch, dass die Halterung und Rahmenkonstruktion wegen der geringeren Last leichter ausgelegt werden können.

Ferner sind die mit Brandschutzgel gefüllten Brandschutzscheiben gegenüber den Scheiben mit festen silikathaltigen Intumeszenz-Zwischenschichten weitaus weniger anfällig gegen eindringende Feuchtigkeit, welche bei den letztgenannten zur Trübung der Zwischenschicht führt, was den Austausch der Scheibe erfordert.

Mit einem Brandschutzgel gefüllte Brandschutzscheiben bestehen üblicherweise aus zwei parallel beabstandeten Glasscheiben aus Einscheibensicherheitsglas (ESG), die über ein in ihren Randbereichen zwischen den Glasscheiben liegendes umlaufendes Abstandshalteprofil und zum Beispiel einen Polyurethan-Randverbund fixiert und miteinander verbunden sind. Durch eine Öffnung in diesem Abstandshalteprofil werden das Brandschutzgel oder die Vorkomponenten eingefüllt, wobei im letzten Fall die Gelbildung durch Polymerisation zum Hydrogel im mit der Mischung ausgefüllten Hohlraum zwischen den Glasscheiben erfolgt. Die im Rahmen der Erfindung eingesetzten Brandschutzgele können auch Additive beinhalten wie Silikate, UV-Schutzmittel oder auch Farbstoffe.

Das in diesen Brandschutzscheiben eingefüllte Gel wird bei der Polymerisation jedoch nicht vollkommen fest, sondern behält je nach dem Vernetzungsgrad und der Menge an Monomeren in Bezug auf den Wassergehalt eine mehr oder minder feste gelartige Konsistenz. Dies macht mit einem solchen Gel gefüllte Brandschutzscheiben relativ empfindlich gegenüber einem auf die Glasflächen wirkenden Druck, da sich das Gel bei leichtem Verformen der Glasscheibe in der Schicht verschiebt.

Aus diesem Grund ist es problematisch, Halterungen direkt an diese Scheiben anzubringen, bei denen Druck auf die Glasscheiben ausgeübt wird. Zumeist werden solche Scheiben deshalb in einen Rahmen eingefasst, an dem dann die Halterungen angreifen können. Die erfindungsgemäße Konstruktion ermöglicht es jedoch, auch mit Brandschutzgel gefüllte Brandschutzscheiben rahmenlos zu verbauen, indem die Anschlagflächen des Abstandhalters den beim Einspannen der Doppelverglasung im Klemmsitz auftretenden Druck aufnehmen und so ein Verbiegen der Glasscheiben verhindern.

Ein besonderer Vorteil der erfindungsgemäßen Verglasung liegt darin, dass für den Fall, dass bei einem Brand die Glasscheibe auf der Brandseite durch die hohen Temperaturen platzt, die zweite Scheibe währenddessen durch das Brandschutzgel gekühlt wird und auch bei längerer Brandexposition intakt bleibt.

Die Herstellung einer erfindungsgemäßen Verglasung wird anhand einer mit einem Brandschutzgel gefüllten Brandschutzscheibe im Folgenden erläutert. Dabei werden zweckmäßigerweise zwei Brandschutz- Glasscheiben aus Einscheibensicherheitsglas mit zueinander korrespondierenden Aussparungen - beispielsweise in Kreisform - zur Anbringung eines Türscharniers bereitgestellt. Eine der Glasscheiben wird auf einen festen Untergrund gelegt und je ein Abstandhalter mit einer seiner Anschlagflächen über den Bereich der Aussparung geklebt. Bei der Positionierung des Abstandhalters sorgt die konische Auflauffläche für eine exakte Zentrierung des Abstandhalters in der Aussparung. Die Anschlagflächen des Abstandhalters besitzen einen entsprechend der gewünschten Klebefläche größeren Durchmesser als die Aussparung der Glasscheibe. Die Verklebung kann beispielsweise mit einem Silikonklebstoff oder einem silylvernetztenden Klebstoff erfolgen. Zweckmäßigerweise ist der Innendurchmesser der Hülse maximal so groß wie der Durchmesser der Aussparung.

Im nächsten Schritt wird an dieser Glasscheibe der für gelgefüllte Brandschutzscheiben übliche Randverbund umlaufend randseitig aufgeklebt. Dabei handelt es sich beispielsweise um ein Polyurethanprofil. Die Höhe des Randverbundes und der gegenseitige Abstand der Anschlagflächen des Abstandhalters werden zweckmäßigerweise identisch gewählt.

Im Folgenden Schritt wird die zweite Brandschutz-Glasscheibe mit korrespondierenden Aussparungen auf den Randverbund und den Abstandhalter geklebt. Auch bei diesem Schritt sorgt die konische Auflauffläche für eine exakte Zentrierung von Abstandhalter und Aussparung. Anschließend wird der zwischen den beiden Brandschutz- Glasscheiben ausgebildete Zwischenraum mit einem Brandschutzgel vollständig ausgefüllt. Dazu kann in dem Randverbund eine Einfüllöffnung vorgesehen sein, die nach dem vollständigen Befüllen verschlossen wird. Schließlich wird noch die Druckhülse in die Hülse eingeschoben so dass die Verglasung montiert werden kann.

Da die erfindungsgemäße Verglasung direkt mittels einer Halterung fixiert werden kann, lassen sich Brandschutzverglasungen bauen, bei denen die Scheiben nicht jeweils in einen umlaufenden Rahmen eingefasst werden müssen. Auf diese Weise erlauben die mit den erfindungsgemäßen Halterungen ausgerüsteten Brandschutzelemente einen höheren Lichtdurchtritt. Außerdem wirken derartige Brandschutzelemente optisch ansprechender. Wegen der strapazierfähigeren Verklebung zwischen Abstandhalter und Glasscheiben kann zudem ein Luftzutritt in das Brandschutzgel wirksam verhindert werden.

Ein weiterer Gegenstand der vorliegenden Erfindung ist gerichtet auf ein Brandschutzelement, insbesondere in Form eines Wandelementes, eines Fensters, oder einer Türe, umfassend eine erfindungsgemäße Verglasung die mit einer Halterung fixiert ist, wobei die Halterung zumindest ein Halteelement, eine Gegenplatte und ein Fixiermittel umfasst, mit dem das Halteelement durch die Druckhülse mit der Gegenplatte verbunden werden kann.

Die Anschlagflächen des Abstandhalters sorgen bei diesem Brandschutzelement dafür, dass die einzelnen Glasscheiben der Brandschutz-Doppelverglasung zwischen dem Halteelement und der Gegenplatte im Klemmsitz eingespannt und auf diese Weise fixiert werden können, ohne dass starke mechanische Kräfte und Momente auf die einzelnen Glasscheiben der Doppelverglasung einwirken. Diese Wirkung wird durch die Druckhülse weiter verbessert, da die Kräfte durch die Fixierung am Halteelement weitestgehend auf der Druckhülse lasten. An die erfindungsgemäße Verglasung können somit Halterungen für feststehende Glaselemente genauso angebracht werden, wie Tür- oder Fensterscharniere beziehungsweise entsprechende Beschläge.

In weiterer Ausgestaltung des erfindungsgemäßen Brandschutzelements ist das Halteelement und/ oder die Gegenplatte auf der der Glasscheibe zugewandten Seite mit einem Dämpfungselement versehen. Hierdurch kann der direkte Kontakt zwischen Metall und Glas vermieden werden. Das Dämpfungselement kann vorteilhafterweise eine Dicke aufweisen, die zumindest dem jeweiligen Überstand der Druckhülse über die Oberflächen der Glasscheiben entspricht, damit das Dämpfungselement beim Anziehen des Fixiermittels leicht komprimiert wird.

Ein solches Dämpfungselement kann beispielsweise eine Unterlagscheibe oder ein O-Ring sein. Dieser kann aus einem Kunststoff bestehen, insbesondere PTFE oder einem Polyamid, insbesondere Aramid, Silicon oder Gummi. In ganz besonders vorteilhafter Form ist die Unterlegscheibe aus einem hitzebeständigen Material. Dies ist besonders vorteilhaft, da auf diese Weise ein fester Klemmsitz für die Brandschutzscheibe verwirklicht werden kann ohne dass das Halteelement und die Gegenplatte, die üblicherweise aus Metall sind, direkten Kontakt zu den Glasscheiben besitzen.

Bei dem erfindungsgemäßen Brandschutzelement sind das Halteelement und die Gegenplatte durch ein Fixiermittel miteinander verbunden. Dieses Fixiermittel kann beispielsweise ein Metallstift sein, der auf beiden Seiten angeschweißt wird oder aber in vorteilhafter Weise kann das Fixiermittel eine Schraube sein. Diese eröffnet die Möglichkeit, den Klemmsitz der erfindungsgemäßen Halterung über das an die Schraube angelegte Drehmoment beim Anziehen exakt festzulegen. Die Gegenplatte kann in diesem Fall eine Gewindevertiefung aufweisen oder aber auch ein durchgehendes Loch, in das ein Gewinde geschnitten ist. Ebenso kann die Gegenplatte durch eine Mutter gebildet werden, vorzugsweise in Kombination mit einer Unterlegscheibe.

Nach einer weiteren Ausführungsform des erfindungsgemäßen Brandschutzelements ist die Gegenplatte der Halterung ebenfalls als Halteelement ausgebildet. Diese Ausgestaltung ermöglicht es, die Halterung auf beiden Seiten der Brandschutzscheibe beispielsweise an einer Gebäudewand zu befestigen. Auf diese Weise können besonders hohe Brandschutzverglasungen mit einer verhältnismäßig geringen Anzahl an Halterungen sicher befestigt werden.

### Ausführungsbeispiel:

Die Funktionsweise der erfindungsgemäßen Halterung wird im Folgenden anhand der Figuren 1 bis 4 beschrieben. Dabei zeigen
- Fig. 1: eine erfindungsgemäße Verglasung in Form einer rahmenlosen BrandschutzGlastür in der Draufsicht;
- Fig. 2: eine ausschnittsweise Vergrößerung einer Türschlossaussparung A der Tür gemäß Fig. 1;
- Fig. 3: den Bildausschnitt A gemäß Fig. 2 in Schnittdarstellung; sowie
- Fig. 4: eine vergrößerte Darstellung eines erfindungsgemäßen Abstandhalters mit einer Halterung.

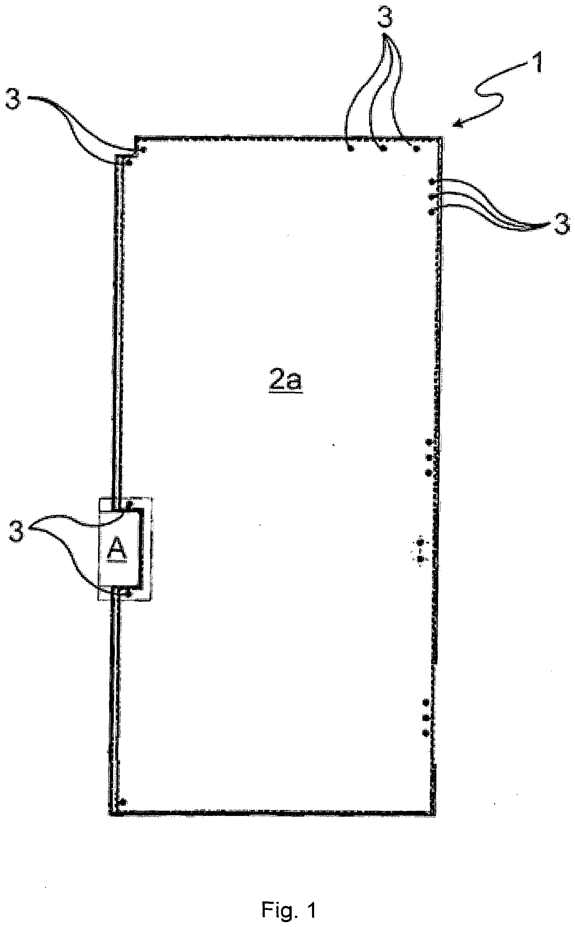

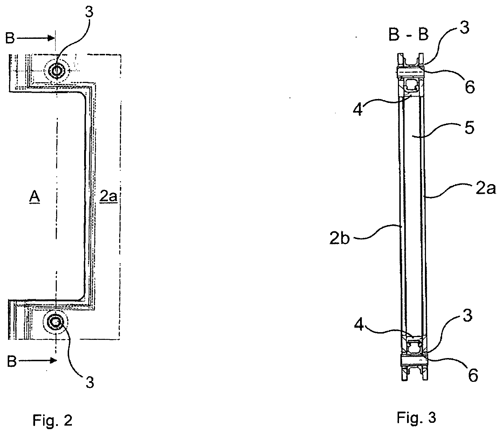

In Fig. 1 ist eine erfindungsgemäße Verglasung 1 in Form eines Türblatts einer rahmenlosen Brandschutztür dargestellt. Das Türblatt weist zwei parallel zueinander beabstandete Glasscheiben 2a, 2b aus Einscheibensicherheitsglas auf, wobei vorliegend nur die obere Glasscheibe 2a zu sehen ist, da diese die weitere Glasscheibe 2b verdeckt. In den Glasscheiben 2a, 2b sind mehrere kreisrunde Aussparungen 3 für die Montage des Türblatts 1 beziehungsweise zur Anbringung eines Türschlosses vorgesehen. Die Fig. 2 und 3 zeigen einen vergrößerten Ausschnitt des Bereichs A des Türblatts in der Fig.1, also desjenigen Bereichs, in dem das Türschloss montiert wird. Dabei spiegelt die Darstellung der Fig. 2 die Draufsicht und Fig. 3 die Schnittansicht entlang der Linie B-B wieder. In der Fig. 3 ist zu erkennen, dass die Glasscheiben 2a, 2b mit einem Randverbund 4 aus Polyurethan verklebt sind, der vollständig umlaufend ausgebildet ist. Das zwischen den Glasscheiben 2a, 2b und dem Randverbund 4 eingeschlossene Volumen ist mit einem Brandschutzgel 5 vollständig gefüllt. Der Randverbund 4 fixiert die Glasscheiben 2a, 2b auf dem gewünschten Abstand zueinander und verhindert gleichzeitig ein Ausfließen des Brandschutzgels 5.

Das Brandschutzgel 5 wird beispielsweise als Hydrogel aus einer NaCl/ MgCl₂ Salzlösung unter Zugabe polymerisierbarer Verbindungen wie einer Mischung aus Acrylamid, N-Methylolacrylamid, Methylenbisarcylamid und einem Polymerisationsbeschleuniger in Wasser entweder vor dem Einfüllen zwischen die Glasscheiben 2a, 2b hergestellt oder in-situ zwischen den Glasscheiben 2a, 2b erzeugt, indem die oben genannten Komponenten miteinander vermischt und direkt in den Hohlraum zwischen die Glasscheiben 2a, 2b eingefüllt werden. Die Polymerisation zum Hydrogel erfolgt dann im nun mit der Mischung ausgefüllten Hohlraum zwischen den Glasscheiben 2a, 2b.

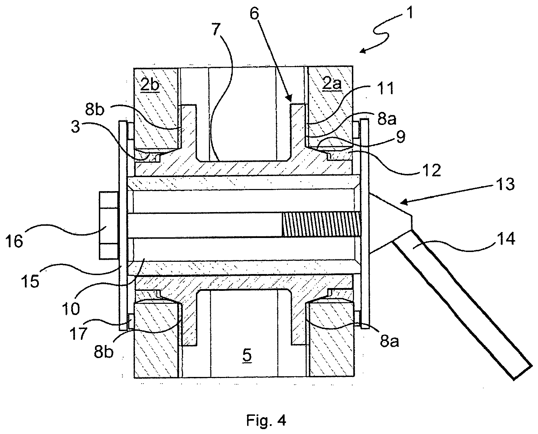

Im Bereich der Aussparung 3 ist erfindungsgemäß ein Abstandhalter 6 vorgesehen, der in der Fig. 4 vergrößert dargestellt ist. Der Abstandhalter 6 weist eine kreisrunde Hülse 7 aus PE-ummanteltem Stahl und zwei mit der Hülse 7 fest verbundene parallel beabstandete kreisrunde Anschlagflächen 8a, 8b auf, wobei die Hülse 7 auf beiden Seiten der Anschlagflächen 8a, 8b übersteht. Der zwischen den Anschlagflächen 8a, 8b definierte Abstand entspricht der Höhe des Randverbunds 4.

An dem Abstandhalter 6 sind ferner konische Auflaufflächen 9 vorgesehen, die bei der vorliegend dargestellten Ausführungsform im Übergangsbereich zwischen der Hülse 7 und den Anschlagflächen 8a, 8b angeordnet sind. Die konischen Auflaufflächen 9 verbessern zum einen die Abdichtung zwischen den Glasscheiben 2a, 2b und dem Abstandhalter 6 und erleichtern zudem dessen Zentrierung in der Aussparung 3 während der Montage.

In der Hülse 7 ist ferner formschlüssig eine Druckhülse 10 (Kraftaufnahmehülse) aus Edelstahl zur Durchführung einer Schraube eingeschoben, wobei die Druckhülse 10 die Oberfläche der Glasscheiben 2a, 2b beidseitig jeweils um 1 mm überragt.

Zur Fixierung des Abstandshalters 6 sind die Anschlagflächen 8a, 8b vollflächig mit den Glasscheiben 2a, 2b durch eine Klebstoffschicht 11 aus einem Silikonklebstoff verklebt. Der Bereich zwischen der Aussparung 3 und der durch die Aussparung 3 hindurchreichenden Druckhülse 10 ist mit einer Silikondichtmasse 12 verfüllt. Damit dichtet der Abstandhalter 6 das Brandschutzgel 5 und die Umgebung zuverlässig gegeneinander ab.

Um die erfindungsgemäße Verglasung 1 als Teil eines rahmenlosen Brandschutzelements in einem Raum zu befestigen, ist daran eine Halterung 13 vorgesehen. Die Halterung 13 umfasst ein Halteelement 14, eine Gegenplatte 15 und ein Fixiermittel 16 in Form einer Schraube. Die Schraube 16 ist durch die in der Hülse 7 angeordnete Druckhülse 10 geführt und verbindet das Halteelement 14 mit der Gegenplatte 15. Zwischen dem Halteelement 14 beziehungsweise der Gegenplatte 15 und den jeweiligen Oberflächen der Glasscheiben 2a, 2b ist je ein ringförmiges Dämpfungselement 17 vorgesehen. Die Halterung 13 bildet somit im zusammengebauten Zustand für die erste Glasscheibe 2a zwischen Halteelement 14 und erster Anschlagfläche 8a und für die zweite Glasscheibe 2b zwischen Gegenplatte 15 und der zweiten Anschlagfläche 8b einen Klemmsitz aus, ohne dass die beiden Glasscheiben 2a, 2b gegeneinander gedrückt werden.

### Bezugszeichenliste:

- 1): Verglasung
- 2a, b): Glasscheibe
- 3): Aussparung
- 4): Randverbund
- 5): Brandschutzgel
- 6): Abstandhalter
- 7): Hülse
- 8a, b): Anschlagfläche
- 9): konische Auflauffläche
- 10): Druckhülse
- 11): Klebstoffschicht
- 12): Silikondichtmasse
- 13): Halterung
- 14): Halteelement
- 15): Gegenplatte
- 16): Fixiermittel
- 17): Dämpfungselement

## Patentansprüche

1. Verglasung (1) für Brandschutz-Wandelemente, -Fenster, -Türen oder dergleichen mit zumindest zwei parallel beabstandeten Glasscheiben (2a, 2b) und einem zwischen diesen Glasscheiben (2a, 2b) angeordneten Abstandhalter (6), wobei der Abstandhalter (6) eine Hülse (7) und zumindest zwei mit der Hülse (7) fest verbundene parallel beabstandete Anschlagflächen (8a, 8b) aufweist und die Hülse (7) beide Anschlagflächen (8a, 8b) in longitudinaler Richtung der Hülse (7) überragt,
**dadurch gekennzeichnet, dass**
in der Hülse (7) eine Druckhülse (10) angeordnet ist, welche die Außenflächen der Glasscheiben (2a, 2b) überragt.

2. Verglasung nach Anspruch 1,
**dadurch gekennzeichnet, dass**
dass die Druckhülse (10) in der Hülse (7) formschlüssig angeordnet ist.

3. Verglasung nach Anspruch 1 oder 2,
**dadurch gekennzeichnet, dass**
die Druckhülse (10) die Außenflächen der Glasscheiben (2a, 2b) um 0,5 bis 5 mm überragt.

4. Verglasung nach einem der vorstehenden Ansprüche,
**dadurch gekennzeichnet, dass**
der Abstandhalter (6) konische Auflaufflächen (9) aufweist, die insbesondere im Übergangsbereich zwischen der Hülse (7) und den Anschlagflächen (8a, 8b) vorgesehen sind.

5. Verglasung nach einem der vorstehenden Ansprüche,
**dadurch gekennzeichnet, dass**
die Hülse (7) und/ oder die Anschlagflächen (8a, 8b) einen runden Querschnitt aufweisen.

6. Verglasung nach einem der vorstehenden Ansprüche,
**dadurch gekennzeichnet, dass**
der Abstandhalter (6) über einen Klebstoff (11) und/ oder ein Füllmaterial (12) mit den Glasscheiben (2a, 2b) verbunden ist.

7. Verglasung nach einem der vorstehenden Ansprüche,
**dadurch gekennzeichnet, dass**
der Abstandhalter (6) und/ oder die Druckhülse (10) aus Kunststoff, Metall, oder aus mit Kunststoff beschichtetem Metall besteht.

8. Verglasung nach Anspruch 7,
**dadurch gekennzeichnet, dass**
der Abstandhalter (6) eine Kunststoffoberfläche aufweist und diese zumindest im Bereich der Anschlagflächen (8a, 8b) haftungsverbessernd vorbehandelt ist.

9. Verglasung nach einem der vorstehenden Ansprüche,
**dadurch gekennzeichnet, dass**
der Raum zwischen den Glasscheiben (2a, 2b) mit einem Feststoff oder einem Gel, insbesondere einem Brandschutzgel (5), gefüllt ist.

10. Verglasung nach einem der vorstehenden Ansprüche,
**dadurch gekennzeichnet, dass**
zumindest eine der Glasscheiben (2a, 2b) aus Sicherheitsglas, insbesondere aus Einscheibensicherheitsglas besteht.

11. Verglasung nach einem der vorstehenden Ansprüche,
**dadurch gekennzeichnet, dass**
die Glasscheiben (2a, 2b) unabhängig voneinander eine Scheibendicke von 3 bis 20 mm aufweisen, vorzugsweise 5 bis 10 mm.

12. Verglasung nach einem der vorstehenden Ansprüche,
**dadurch gekennzeichnet, dass**
die Glasscheiben (2a, 2b) einen Abstand von 5 bis 50 mm aufweisen.

13. Brandschutzelement, insbesondere in Form eines Wandelementes, eines Fensters, oder einer Türe, umfassend eine Verglasung (1) nach einem der Ansprüche 1 bis 12 die mit einer Halterung (13) fixiert ist, wobei die Halterung (13) zumindest ein Halteelement (14), eine Gegenplatte (15) und ein Fixiermittel (16) umfasst, mit dem das Halteelement (14) durch die Druckhülse (10) mit der Gegenplatte (15) verbunden werden kann.

14. Brandschutzelement nach Anspruch 13,
**dadurch gekennzeichnet, dass**
das Halteelement (14) und/ oder die Gegenplatte (15) auf der der Glasscheibe (2a, 2b) zugewandten Seite ein Dämpfungselement (17) aufweist.

15. Brandschutzelement nach Anspruch 13 oder 14,
**dadurch gekennzeichnet, dass**
das Fixiermittel (16) eine Schraube ist.

16. Brandschutzelement nach einem der Ansprüche 13 bis 15,
**dadurch gekennzeichnet, dass**
die Gegenplatte (15) ebenfalls als Halteelement (14) ausgebildet ist.

## Claims

1. A glazing (1) for fire protection wall elements, windows, doors or the like, comprising at least two glass panes (2a, 2b) which are spaced in parallel from each other and a spacer (6) arranged between these glass panes (2a, 2b), wherein the spacer (6) comprises a sleeve (7) and at least two stop surfaces (8a, 8b) which are firmly connected to the sleeve (7) and spaced in parallel from each other, and wherein the sleeve (7) rises above both stop surfaces (8a, 8b) in the longitudinal direction of the sleeve (7),
**characterized in that**
a pressure sleeve (10) is arranged in the sleeve (7), which pressure sleeve rises above the outer surfaces of the glass panes (2a, 2b).

2. A glazing according to claim 1,
**characterized in that**
the pressure sleeve (10) is positively arranged in the sleeve (7).

3. A glazing according to claim 1 or 2,
**characterized in that**
the pressure sleeve (10) rises above the outer surfaces of the glass panes (2a, 2b) by 0.5 to 5 mm.

4. A glazing according to one of the preceding claims,
**characterized in that**
the spacer (6) comprises conical run-up surfaces (9) which are in particular provided in the transition area between the sleeve (7) and the stop surfaces (8a, 8b).

5. A glazing according to one of the preceding claims,
**characterized in that**
the sleeve (7) and/or the stop surfaces (8a, 8b) comprise a round cross section.

6. A glazing according to one of the preceding claims,
**characterized in that**
the spacer (6) is connected to the glass panes (2a, 2b) by means of a glue (11) and/or a filling material (12).

7. A glazing according to one of the preceding claims,
**characterized in that**
the spacer (6) and/or the pressure sleeve (10) is made of plastic, metal or metal coated with plastic.

8. A glazing according to claim 7,
**characterized in that**
the spacer (6) comprises a plastic surface and this one has been pre-treated in an adhesion improving manner at least in the area of the stop surfaces (8a, 8b).

9. A glazing according to one of the preceding claims,
**characterized in that**
the space between the glass panes (2a, 2b) is filled with a solid material or a gel, in particular a fire protection gel (5).

10. A glazing according to one of the preceding claims,
**characterized in that**
at least one of the glass panes (2a, 2b) is made of safety glass, in particular of single-pane safety glass.

11. A glazing according to one of the preceding claims,
**characterized in that**
the glass panes (2a, 2b) comprise, independently from each other, a pane thickness comprised between 3 and 20 mm, preferably between 5 and 10 mm.

12. A glazing according to one of the preceding claims,
**characterized in that**
the glass panes (2a, 2b) comprise a distance of 5 to 50 mm.

13. A fire protection element, in particular in the form of a wall element, a window or a door, comprising a glazing (1) according to one of the claims 1 to 12, which glazing is fixed by means of a holder (13), wherein the holder (13) at least comprises a holding element (14), a counter-plate (15) and a fixation means (16), by means of which the holding element (14) can be connected through the pressure sleeve (10) to the counter-plate (15).

14. A fire protection element according to claim 13,
**characterized in that**
the holding element (14) and/or the counter-plate (15) comprises a damping element (17) on the side facing the glass pane (2a, 2b).

15. A fire protection element according to claim 13 or 14,
**characterized in that**
the fixation means (16) is a screw.

16. A fire protection element according to one of the claims 13 through 15, **characterized in that**
the counter-plate (15) is also designed as a holding element (14).

## Revendications

1. Vitrage (1) destiné aux éléments de paroi coupe-feu, aux fenêtres coupe-feu, aux portes coupe-feu et similaire, comprenant au moins deux vitres en verre (2a, 2b) espacées en parallèle l'une de l'autre et un écarteur (6) disposé entre ces vitres en verre (2a, 2b), l'écarteur (6) comprenant une gaine (7) et au moins deux surfaces de butée (8a, 8b), qui sont fermement reliées à la gaine et espacées en parallèle l'une de l'autre, et la gaine (7) s'étendant au-delà des deux surfaces de butée (8a, 8b) dans la direction longitudinale de la gaine (7),
**caractérisé en ce qu'**
une douille de pression (10) est disposée dans la gaine (7), laquelle douille de pression (10) s'étend au-delà des surfaces extérieures des vitres en verre (2a, 2b).

2. Vitrage selon la revendication 1,
**caractérisé en ce que**
la douille de pression (10) est disposée à complémentarité de forme dans la gaine (7).

3. Vitrage selon la revendication 1 ou la revendication 2,
**caractérisé en ce que**
la douille de pression (10) s'étend au-delà des surfaces extérieures des vitres en verre (2a, 2b) par 0,5 à 5 mm.

4. Vitrage selon l'une des revendications précédentes,
**caractérisé en ce que**
l'écarteur (6) comprend des surfaces de montée coniques (9), lesquelles sont notamment prévues dans la zone de transition entre la gaine (7) et les surfaces de butée (8a, 8b).

5. Vitrage selon l'une des revendications précédentes,
**caractérisé en ce que**
la gaine (7) et/ou les surfaces de butée (8a, 8b) comprennent une section transversale ronde.

6. Vitrage selon l'une des revendications précédentes,
**caractérisé en ce que**
l'écarteur (6) est relié aux vitres en verre (2a, 2b) par un adhésif (11) et/ou par un matériau de remplissage (12).

7. Vitrage selon l'une des revendications précédentes,
**caractérisé en ce que**
l'écarteur (6) et/ou la douille de pression (10) sont en matière plastique, en métal ou en métal revêtu de matière plastique.

8. Vitrage selon la revendication 7,
**caractérisé en ce que**
l'écarteur (6) comprend une surface en matière plastique et celle-ci est prétraitée de manière à améliorer l'adhésion, au moins dans la zone des surfaces de butée (8a, 8b).

9. Vitrage selon l'une des revendications précédentes,
**caractérisé en ce que**
l'espace entre les vitres en verre (2a, 2b) est rempli d'une matière solide ou d'un gel, notamment d'un gel coupe-feu (5).

10. Vitrage selon l'une des revendications précédentes,
**caractérisé en ce que**
l'au moins une des vitres en verre (2a, 2b) est fabriquée en verre de sécurité, notamment en verre de sécurité en feuille simple.

11. Vitrage selon l'une des revendications précédentes,
**caractérisé en ce que**
les vitres en verre (2a, 2b) comprennent, indépendamment l'une de l'autre, une épaisseur de vitre comprise entre 3 et 20 mm, de préférence entre 5 et 10 mm.

12. Vitrage selon l'une des revendications précédentes,
**caractérisé en ce que**
les vitres en verre (2a, 2b) comprennent une distance comprise entre 5 et 50 mm l'une par rapport à l'autre.

13. Elément coupe-feu, notamment en forme d'un élément de paroi, d'une fenêtre ou d'une porte, comprenant un vitrage (1) selon l'une des revendications 1 à 12, lequel vitrage est fixé par un support (13), le support (13) comprenant au moins un élément de retenue (14), une contre-plaque (15) et un moyen de fixation (16), par moyen duquel l'élément de retenue (14) peut être relié à la contre-plaque (15) à travers la douille de pression (10).

14. Elément coupe-feu selon la revendication 13,
**caractérisé en ce que**
l'élément de retenue (14) et/ou la contre-plaque (15) comprend un élément d'amortissement (17) du côté faisant face à la vitre en verre (2a, 2b).

15. Elément coupe-feu selon la revendication 13 ou la revendication 14, **caractérisé en ce que**
le moyen de fixation (16) est une vis.

16. Elément coupe-feu selon l'une des revendications 13 à 15,
**caractérisé en ce que**
la contre-plaque (15) est aussi configurée comme un élément de retenue (14).
